# EUROPEAN PATENT SPECIFICATION

(11) **EP 0 738 017 B1**
(45) Date of publication and mention of the grant of the patent: **29.08.2001**
(21) Application number: 96302408.8
(22) Date of filing: 02.04.1996
(51) Int. Cl.: H01M 4/52, H01M 4/32

(54) **An alkali storage cell having high capacity with excellent cycle life and a method of producing a nickel electrode for such an alkali storage cell**
Hohe Kapazität und ausgezeichnete Lebensdauer alkalische Speicherzelle und Nickelelektrode, Herstellungsverfahren für solche alkalische Zelle
Pile alcaline ayant une grande capacité et une excellente durée de vie et méthode de fabrication d'une électrode au nickel pour une telle pile alcaline

(30) Priority: 11.04.1995 JP 8543195; 12.10.1995 JP 26419795
(43) Date of publication of application: 16.10.1996
(73) Proprietor: SANYO ELECTRIC CO., LTD., Moriguchi-shi, Osaka 570-0083 (JP)
(72) Inventor: Yasuoka, Shigekazu, Sumoto-shi, Hyogo (JP); Terasaka, Masayuki, Tsuna-gun, Hyogo (JP); Muto, Toyoshige, Mihara-gun, Hyogo (JP)
(74) Representative: Caldwell, Judith Margaret

(56) References cited:
- EP-A- 0 462 889
- EP-A- 0 523 284
- EP-A- 0 544 011
- PATENT ABSTRACTS OF JAPAN vol. 018, no. 210 (E-1537), 14 April 1994 & JP-A-06 013075 (YUASA CORP), 21 January 1994,

## Description

### BACKGROUND OF THE INVENTION

### (1) Field of the Invention

The present invention relates to an alkali storage cell having high capacity with excellent cycle life and a method of producing a non-sintered type nickel electrode used for such an alkali storage cell, especially to improvement of active material used in a non-sintered type nickel electrode.

### (2) Related Art

A nickel electrode in which nickel hydroxide is used as active material is widely used as a positive electrode of an alkali storage cell such as a nickel-cadmium storage cell, a nickel-hydride storage cell and the like. The nickel electrode can be categorized into a sintered type and a non-sintered type: A sintered type has been often used; A non-sintered type can increase cell capacity easily as loading density of active material can be increased.

A non-sintered type nickel electrode can be produced in the following way: nickel active material mainly constituted by nickel hydroxide is produced; then the nickel active material is loaded into foaming nickel substrate and the like, or a paste of nickel active material is applied to a punched metal and the like.

A non-sintered type nickel electrode has a drawback: cell capacity decreases as conductivity of the electrode decreases and active material drops when γ-nickel oxyhydroxide is generated along with passage of charge and discharge cycles.

In order to cope with such a problem, techniques of adding zinc compound and the like to nickel hydroxide have been suggested.
1. Japanese Laid-Open Patent Application No.5-182662 discloses creating active material of different type of material (zinc, cadmium, magnesium, etc) being in the nickel hydroxide particles as solid in solution state (method of creating such active material is referred to as solid solution method hereinafter).
   According to this method, generation of γ-nickel oxyhydroxide can be suppressed since zinc and the like exist in crystal lattice of nickel hydroxide and protons transfer more freely in nickel hydroxide crystals.
   However, this method requires a huge amount of zinc, thereby reducing amount of nickel hydroxide which contribute to electrochemical reaction. Therefore this method cannot realize high energy density of an electrode.
2. Japanese Laid-Open Patent Application No. 3-77272, and No. 3-77273 disclose covering zinc compound powder and cadmium compound powder on the surface of nickel hydroxide particles by mechanical power (such a method is referred to as mechanical covering method hereinafter).
   According to this method, the surface of nickel hydroxide particles are in contact with electrolyte. So compared to solid solution method by which zinc is evenly distributed in the active material, less amount of zinc can work effectively.
   However, it is difficult to evenly distribute and cover zinc compound powder and the like on the surface of each nickel hydroxide particle. So there is a wide gap between each particle in the amount of the covered zinc compound. And the entire surface of a particle is not necessarily covered with a layer of zinc compound. Therefore, it is difficult to obtain the effects commensurate with the amount of zinc and the like. Moreover, as zinc compound powder and the like are covered mechanically, they are not completely adhered to the surface of the nickel hydroxide particles, so the surface of the particles is rough. Seemingly, the particles have a lot of pores, resulting in low apparent density. Therefore, it is difficult to realize high energy density of the electrode.
3. Japanese Laid-Open Patent Application No. 3-274666, 3-192657, 6-140037, and 59-224062 disclose precipitating a compound of zinc, cadmium and the like on the surface of nickel hydroxide particles (such a method is referred to as chemical covering method).

Japanese Laid-Open Patent Application No. 6-13075 describes a chemical covering method wherein cobalt- or boron-contained nickel hydroxide particles are covered in a solid solution layer of zinc, cadmium or magnesium to prevent swelling of a high capacity nickel electrode.

Chemical covering method is superior to solid solution method in the amount of zinc, as less amount of zinc works efficiently on the surface of active material particles; and the chemical covering method is superior to the mechanical covering method as zinc is evenly distributed and covered on the surface of the active material particles.

However, according to the chemical covering method, after nickel hydroxide is immersed into acid solution of zinc and the like, it is neutralized in alkali solution (such a method is referred to as no pH control method hereinafter). Nickel active material produced in such a method does not sufficiently suppress the generation of γ-nickel oxyhydroxide.

Another drawback of a non-sintered type nickel electrode is that it is inferior to a sintered type electrode in conductivity, its active material utilization is low.

Japanese Laid-Open patent Applications No. 62-222566 and No. 62-234867 disclose covering surface of nickel hydroxide particles or particles mainly composed of nickel hydroxide with a layer of cobalt compound having good conductivity. According to this method, high active material utilization can be obtained even though the amount of cobalt compound is small.

However, along with passage of charge and discharge cycles, cobalt on the surface diffuses into the nickel hydroxide particles. Therefore, it is impossible to maintain good conductivity on the surface of the nickel hydroxide particles for a long time, and cell capacity decreases greatly.

### SUMMARY OF THE INVENTION

It is an object of the present invention to provide an alkali storage cell characterized in high nickel active material utilization, little decrease of cycle characteristics due to electrode swelling, and high capacity.

It is another object of the present invention to provide an alkali storage cell having high capacity and long service life by suppressing diffusion of cobalt on the surface of nickel hydroxide particles into the nickel hydroxide particles along with charge and discharge cycles.

The first object can be achieved by the following features.
(1) A method of producing a nickel electrode for an alkali storage cell comprising steps of: creating an active material including forming a first covering layer on the surface of one of nickel hydroxide particles and particles mainly composed of nickel hydroxide in a dispersion medium, the first covering layer being mainly composed of at least one compound of a dense element selected from a group consisting of group II elements cadmium, zinc and magnesium compounds, wherein the first covering layer is formed by precipitation by adding a solution in which a given amount of the cadmium, zinc or magnesium is dissolved and an alkali solution, where the amount of each solution is adjusted to maintain the pH of the dispersion medium at 9 to 12, forming a second covering layer on the surface of the first covering layer, the second covering layer being mainly composed of a cobalt compound, and holding the active material in an active material supporter.
(2) An alkali storage cell, wherein active material in a positive electrode comprises one of nickel hydroxide particles and particles mainly composed of nickel hydroxide on which first and second covering layers are formed, the first covering layer being composed of at least one compound of a dense element selected from a group consisting of group II elements cadmium, zinc and magnesium compounds, wherein the first covering layer is formed by precipitation by adding a solution in which a given amount of the cadmium, zinc or magnesium is dissolved and an alkali solution, where the amount of each solution is adjusted to maintain the pH of the dispersion medium at 9 to 12, and the second covering layer formed on the surface of the first covering layer being mainly composed of a cobalt compound.

The present inventors found that generation of γ-nickel oxyhydroxide cannot be suppressed sufficiently when a covering layer of a zinc compound, cadmium compound, and the like is formed without pH control since the covering layer has asperities and is not dense.

The present inventors also found that a more dense covering layer having few asperities can be formed on the surface of nickel hydroxide particles by adding a solution in which the group II element is dissolved and an alkali solution to dispersion medium in which nickel hydroxide particles are dispersed, with pH of the dispersion medium being maintained at 9 to 12.

It is possible to think that a dense covering layer can be formed because the group II element is precipitated gradually and continuously on the surface of nickel hydroxide particles.

On the other hand, it is possible to think that the abovementioned covering layer cannot be formed with no pH control since precipitation happens rapidly.

The optimal amount of the covering layer of the group II element should be 0.5 to 10 percent by weight of nickel hydroxide particles in the light of suppressing generation of γ-nickel oxyhydroxide and active material utilization.

The covering layer composed of the group II element can be formed by using a solution selected from a group consisting of aqueous solutions of sulfate, nitrate, chloride, ammonium sulfate salt, ammonium nitrate salt, and ammonium hydrochloride of the group II elements. In such a case, generation of γ-nickel oxyhydroxide is suppressed well, and amount of residue of SO₄²⁻, NO₃⁻, Cl⁻, and the like in the active material are quite small.

The present inventors found that when the group II element compound is precipitated in the presence of ammonia group (ammonia or ammonia compound), precipitation happens gradually and continuously so that a more dense covering layer having fewer asperities can be formed, since ammonia complex of the group II element is formed.

It is possible to think that generation of γ-nickel oxyhydroxide is suppressed when a dense covering layer of the group II element compound is formed because the covering layer prevents alkali metal or water from diffusing into crystals of nickel oxyhydroxide along with passage of charge and discharge cycles.

If a covering layer of the group II element compound is dense and has few asperities, the surface of the active material particles are smooth, and the apparent density of active material increases. Therefore, the loading density of the active material in a nickel electrode is increased, thereby contributing to the high energy density of an electrode.

Moreover, a small amount of the group II element works effectively, so this feature also contributes to the high energy density of an electrode.

According to the above features, a first covering layer having few asperities, which is dense and composed of the group II element compound, is formed on the surface of nickel hydroxide particles. A second covering layer is then formed on the surface of the first covering layer. The first covering layer prevents cobalt in the second covering layer from diffusing into nickel hydroxide particles.

Therefore, during charge and discharge cycles, good conductivity due to the cobalt can be maintained for a long time, and decrease of cell capacity can be prevented.

Here, an optimal amount of the first covering layer is 0.5 to 10 percent by weight of nickel hydroxide particles. A small amount of the group II element compound can generate good effects.

Therefore, the present invention is valuable for making the cell life of an alkali storage cell long and cell capacity large.

Japanese Laid-open Patent Application No. 3-192657 describes forming a cadmium compound layer on the surface of nickel hydroxide particles and a cobalt compound layer thereon. However, as no pH control method is used, a cadmium compound which is dense and has few asperities cannot be formed. Therefore, cobalt diffuses into nickel hydroxide particles through holes in the cadmium compound layer.

### BRIEF DESCRIPTION OF THE DRAWINGS

These and other objects, advantages and features of the invention will become apparent from the following description thereof taken in conjunction with the accompanying drawings which illustrate a specific embodiment of the invention. In the drawing:
Fig. 1 shows how a nickel electrode of Embodiment 1 is produced and state of nickel hydroxide particles at each step;
Fig. 2 shows how a nickel electrode of Embodiment 6 is produced and state of nickel hydroxide particles at each step;
Fig. 3 is the results of Experiment 1, showing the relation between the pH of the solvent and the amount of NO₃⁻ residue when the chemical covering method is used;
Fig. 4 is the results of Experiment 2, showing the relation between the conditions of adding cadmium hydroxide to nickel hydroxide and the apparent density of the active material powder;
Fig. 5 is the results of Experiment 3, showing the relation between the conditions of adding cadmium hydroxide to nickel hydroxide and the γ/β ratio of active material after the experiment;
Fig. 6 is the results of Experiment 4, showing the relation between the conditions of adding cadmium hydroxide to nickel hydroxide and active material utilization of an electrode;
Fig. 7 is the results of Experiment 5, showing the relation between the amount of covering layer of cadmium hydroxide and the y/β ratio;
Fig. 8 is the results of Experiment 5, showing the relation between the amount of covering layer of cadmium hydroxide and active material utilization;
Fig. 9 is the result of Experiment 8, showing the relation between the amount of covering layer of cadmium hydroxide and the y/β ratio of active material;
Fig. 10 is the results of Experiment 10, showing the relation between the charge and discharge cycle number and cell capacity;
Fig. 11 is the results of Experiment 11, showing the relation between the amount of total covering layer and active material utilization;
Fig. 12 is the results of Experiment 12, showing the relation between the ratio of the first covering layer against the second covering layer and active material utilization;
Fig. 13 is the results of Experiment 12, showing the relation between the charge and discharge cycle number and cell capacity; and
Fig. 14 is the results of Experiment 13, showing the relation between the charge and discharge cycle number and cell capacity.

### DESCRIPTION OF THE EMBODIMENTS

Embodiments 1 to 5 are about active material constituted by nickel hydroxide particles and a first covering layer composed of a group II element compound, the first covering layer being formed on the surface of the particles. Embodiments 6 and 7 illustrating the claimed invention are about active materials constituted by nickel hydroxide particles, a first covering layer, and a second covering layer composed of a cobalt compound. While barium and calcium are included in embodiments 5, 7 and 13 it is to be noted that these compounds are outside the scope of the claimed invention.

### (Embodiment 1)

In the present embodiment, chemical covering method is used. Cadmium nitrate aqueous solution and sodium hydroxide aqueous solution are added, with pH of dispersion medium in which nickel hydroxide particles are dispersed being controlled at 9 to 12 (not in the presence of ammonia group).

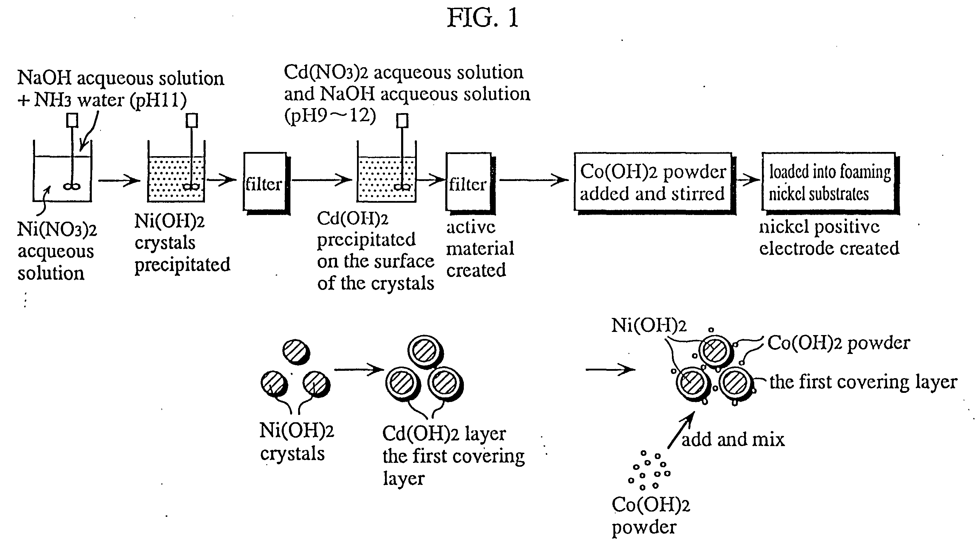

Fig. 1 shows how a nickel electrode of the present embodiment is produced and state of nickel hydroxide particles at each step.

### [Production of Active Material]

Nickel nitrate aqueous solution is added to mixture of sodium hydroxide aqueous solution and aqueous ammonia, and stirred. After steps of filtering, washing by water, and drying, nickel hydroxide particles are produced.

At this time, the amount of nickel nitrate aqueous solution, sodium hydroxide aqueous solution, and aqueous ammonia are adjusted so as to maintain pH of the mixed solution at 11.

Next, the nickel hydroxide particles are stirred in water while cadmium nitrate aqueous solution of 20 percent by weight and sodium hydroxide aqueous solution of 25 percent by weight are being added so that cadmium hydroxide is gradually precipitated on the surface of the nickel hydroxide particles, thereby creating a first covering layer mainly composed of cadmium hydroxide. At this time, amount of each aqueous solution is adjusted so as to produce active material in different dispersion mediums of pH maintained at 9, 10, 11, and 12, respectively.

After that, the particles are filtered, washed by water, and dried so that nickel active materials constituted by nickel hydroxide and a first covering layer mainly composed of cadmium hydroxide are produced.

Here, the amount of cadmium nitrate aqueous solution is set to a certain amount so that the amount of cadmium hydroxide becomes 5 percent by weight against the nickel hydroxide.

The ratio of nickel hydroxide and cadmium of the active material can be measured by dissolving the active material in hydrochloric acid and analyzing the ratio of nickel hydroxide and cadmium in the solution by an ICP emission spectrometry.

Each active material thus produced in the different dispersion mediums of pH 9, 10, 11, and 12 is hereinafter referred to as active materials a1, a2, a3, and a4, respectively.

The first covering layer is dense and has few asperities, as cadmium hydroxide is gradually precipitated, with pH of the dispersion medium being maintained at 9 to 12.

### [Production of Nickel Electrode]

Active material slurry is produced in the following way:
cobalt hydroxide powder of 10 percent by weight is mixed into each of nickel active materials a1 to a4 of 90 percent by weight. Then, methyl cellulose aqueous solution of 20 percent by weight (concentration: 1 percent by weight) against the mixture is mixed into each.

This active material slurry is loaded into foamed nickel plates so that nickel electrodes of theoretical capacity 600mAh are produced.

Nickel electrodes thus created are hereinafter referred to as nickel electrodes A1, A2, A3, and A4.

### (Comparative Example 1)

Active materials y1, y2, and y3 are produced in the same way as Embodiment 1 except for the pH being maintained at 8, 13 and 14.

Nickel electrodes Y1, Y2, and Y3 are produced in the same as Embodiment 1, with active materials y1, y2, and y3 being used.

### (Comparative Example 2)

Nickel hydroxide particles produced in the same way as in Embodiment I are stirred in cadmium nitrate aqueous solution of 20 percent by weight, and neutralized by adding sodium hydroxide aqueous solution, thereby precipitating a covering layer of cadmium hydroxide on the surface of the nickel hydroxide particles (no pH control method).

In such a method, cadmium hydroxide is precipitated rapidly as the pH of the mixed solution is not maintained at a certain value. After the particles are filtered, washed by water, and dried, active material x1 is produced. The amount of cadmium nitrate aqueous solution is set to a certain amount so that amount of cadmium hydroxide become 5 percent by weight against the nickel hydroxide.

Nickel electrode X1 is produced in the same way as Embodiment 1, with active material x1 being used.

### (Comparative Example 3)

Sodium hydroxide aqueous solution and aqueous ammonia are added to mixture of nickel nitrate aqueous solution and cadmium nitrate aqueous solution and stirred. At this time, the amount of sodium hydroxide aqueous solution, and aqueous ammonia are adjusted so as to maintain pH of the mixed solution at 11. After steps of filtering, washing by water, and drying, active material x2 is produced. Active material x2 has the next characteristic: cadmium of 5 percent by weight against nickel hydroxide is a solid solution state of nickel hydroxide.

Nickel electrode X2 is produced in the same way as Embodiment 1, with active material x2 being used.

### (Comparative Example 4)

Nickel hydroxide particles are produced in the same way as Embodiment 1. On the surface of the nickel hydroxide particles, cadmium hydroxide particles are covered by mechanical power (hybridization), thereby producing active material x3 constituted by nickel hydroxide particles with a covering layer of cadmium hydroxide of 5 percent by weight on their surface is produced.

Nickel electrode X3 is produced in the same way as Embodiment 1, with active material x3 being used.

### (Comparative Example 5)

Nickel hydroxide particles without a covering layer are produced in the same way as Embodiment 1 and referred to as active material x0.

Electrode x0 is produced in the same way as embodiment 1, with active material x0 being used.

In the following Embodiments 2 to 4, chemical covering method is used. Cadmium hydroxide is precipitated in the presence of ammonia group, with the pH being maintained at 11.

### (Embodiment 2)

In the present embodiment, cadmium nitrate ammonium aqueous solution is used.

Nickel hydroxide particles produced in the same way as Embodiment 1 are stirred in water while cadmium nitrate ammonium aqueous solution and sodium hydroxide aqueous solution of 20 weight percent are added. The amount of each aqueous solution is adjusted so that pH of the mixed solution is maintained at 11, thereby gradually precipitating cadmium hydroxide on the surface of the nickel hydroxide particles.

After steps of filtering, washing by water, and drying, nickel active material is produced. The amount of cadmium nitrate ammonium aqueous solution is set to a certain amount so that the amount of cadmium hydroxide becomes 5 weight percent against nickel hydroxide. The active material thus produced is hereinafter referred to as active material b1.

Compared to active materials a1 to a4 of Embodiment 1, active material bl has a more dense cadmium hydroxide layer having fewer asperities formed on the surface of the nickel hydroxide particles.

Nickel electrode B1 is produced in the same way as Embodiment 1, with active material b1 being used.

### (Embodiment 3)

In the present embodiment, mixture of sodium hydroxide aqueous solution and aqueous ammonia is used.

Nickel hydroxide particles produced in the same way as Embodiment 1 are stirred in water while cadmium nitrate aqueous solution of 20 weight percent and alkali mixed aqueous solution are added, the alkali mixed aqueous solution being constituted by sodium hydroxide aqueous solution of 25 weight percent and aqueous ammonia of 28 weight percent mixed at ratio 5:1.

Active material b2 is produced in the same way as Embodiment 2. The amount of cadmium nitrate aqueous solution is set to a certain amount so that the amount of cadmium hydroxide becomes 5 weight percent against nickel hydroxide.

Active material b2 has a more dense cadmium hydroxide layer having fewer asperities formed on the surface of the nickel hydroxide particles like the case of Embodiment 2. Nickel electrode B2 is produced in the same way as Embodiment 1, with active material b2 being used.

### (Embodiment 4)

In the present embodiment, cadmium nitrate aqueous solution, sodium hydroxide aqueous solution, and aqueous ammonia are added at the same time.

Nickel hydroxide particles produced in the same way as Embodiment 1 are stirred in water while cadmium nitrate aqueous solution of 20 weight percent, sodium hydroxide aqueous solution of 25 weight percent, and aqueous ammonia of 28 weight% are added. The amount of each aqueous solution is adjusted so that pH of the mixed solution is maintained at 11, thereby gradually precipitating cadmium hydroxide on the surface of the nickel hydroxide particles.

Active material b3 is produced in the same way as Embodiment 2. The amount of cadmium nitrate aqueous solution is set to a certain amount so that the amount of cadmium hydroxide becomes 5 weight percent against nickel hydroxide.

Active material b3 has a more dense layer of cadmium hydroxide having fewer asperities formed on the surface of the nickel hydroxide like the case of Embodiment 2.

Nickel electrode B3 is produced in the same way as embodiment 1, with active material b3 being used.

### (Embodiment 5)

In the present embodiment, the first covering layer is formed by a group II element compound other than cadmium.

Active materials c,d,e, and f are produced in the same way as producing active material a3 of Embodiment 1 except for using zinc nitrate aqueous solution, magnesium nitrate aqueous solution, barium nitrate aqueous solution, and calcium nitrate aqueous solution instead of cadmium nitrate aqueous solution.

Active materials c, d, e, and f have a first covering layer of zinc compound, magnesium compound, barium compound, and calcium compound, respectively, the first covering layer being dense and having few asperities.

Electrodes C, D, E, and F are produced in the same way as embodiment 1, with active materials c, d, e and f being used, respectively.

The characteristics of nickel active materials of Embodiments 1 to 5 and Comparative Examples 1 to 5 are summarized in Table 1.

Here, experiments are carried out, with nickel active materials and nickel electrodes of Embodiments 1 to 5 and Comparative Examples 1 to 5.

### [Experiment 1]

Amount of NO₃⁻ residue of the following each active materials is measured by colorimetric analysis method: active materials a1 to a4 of Embodiment 1 and active materials y1 to y3 of Comparative Example 1 .

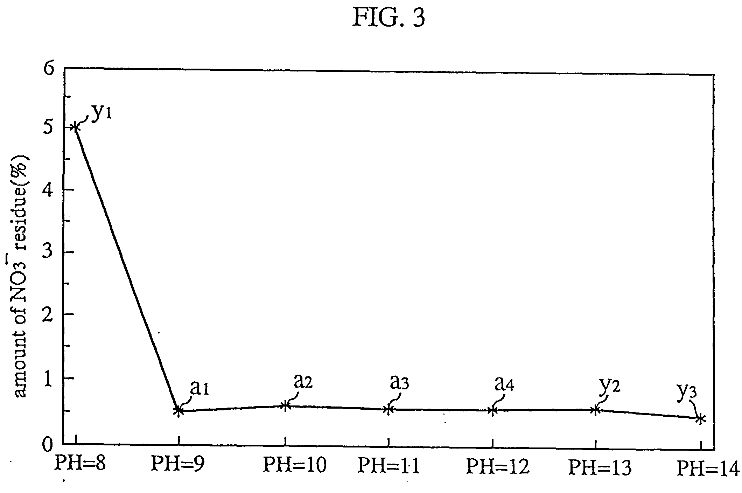

Fig. 3 is the results, showing relation between pH of the solvent and amount of NO₃⁻ residue when chemical covering method is used: active material yl whose pH of the solution is controlled at 8 has a lot amount of NO₃⁻ residue; however, other active materials whose pH of the solution is controlled between 9 to 14 have rather small amount.

Considering that presence of negative radical, such as SO₄²⁻, NO₃⁻, Cl⁻, and the like in the positive electrode deteriorates reservation characteristics, it is obvious that optimal pH is equal to or above 9 when chemical covering method is carried out by using nitrate in group II.

Instead of using nitrate as in the present experiment, sulfate, chloride, and the like can also provide the same effect.

### [Experiment 2]

Apparent density of the following active materials is measured so as to examine relation between method of producing active materials and apparent density: active materials a1-a4 of Embodiment 1; active materials y1-y3 and x1-x3 of Comparative Examples 1 to 4.

The apparent density is measured as follows: 20g of active material powder is poured into a measuring cylinder of 100cc, tapped 100 times, powder volume is measured, and powder density is calculated according to the following formula.$\text{apparent density (g/cc) = 20g / volume after tapping}$

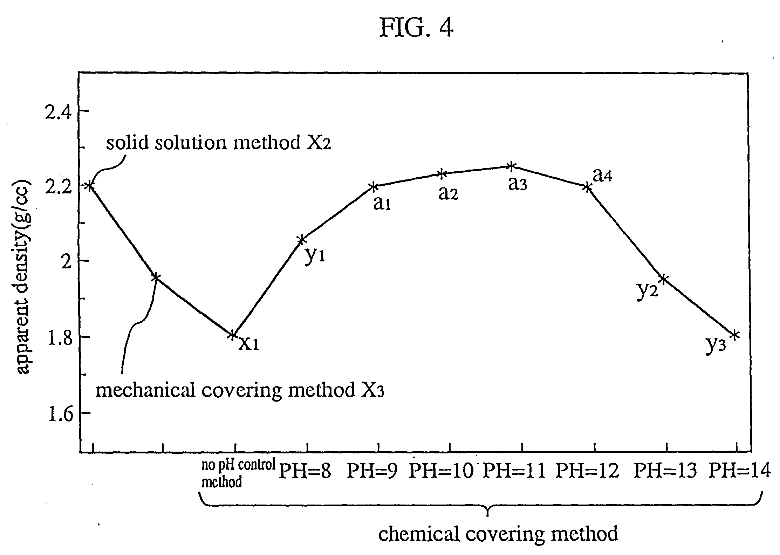

Fig. 4 shows relation between conditions of adding cadmium hydroxide to nickel hydroxide and apparent density of active material powder: among active materials a1-a4 and y1-y3 produced by chemical covering method, apparent density is highest between pH 9 to 12 (especially pH 10 to 11); and apparent density of active material xl produced by no pH control method is the lowest.

It is apparent from this result that pH should maintained at 9 to 12 when chemical covering method is used.

The reason apparent density of active material increases while the pH is adjusted by chemical covering method is that the surface of the particles have few asperities and the particles have a few apparent holes.

Active material x3 produced by mechanical covering method has low apparent density compared to active materials y1 and y2 produced by chemical covering method(pH 8 to 14).

Apparent density of active material x2 produced by solid solution method is almost the same as that of active materials a1 to a4 of Embodiment 1, higher than that of active materials y1, y2, y3, x1, and x3, and lower than that of active materials a2 and a3. The fact apparent density of the active material produced by solid solution method is rather high is natural because the active material does not have a covering layer. The fact that apparent density of active materials a2 and a3 produced by chemical covering method is high compared to active material produced by solid solution method shows that active material particles produced by chemical covering method with pH being adjusted have optimal configuration for increasing apparent density.

### [Experiment 3]

Open type experimental cells (storage cells) are produced, with electrodes A1-A4 of Embodiment 1, electrodes Y1-Y3 and X1-X3 of Comparative Examples 1 to 4 being used. Then, charge and discharge cycle experiment is carried out so as to examine generation of γ-nickel oxyhydroxide.

Open type experimental cells are produced in the following way: the nickel electrode mentioned above are used as positive electrodes, and well-known sintered type cadmium electrodes having sufficient electronic chemical capacity against the positive electrodes are used as negative electrodes; electricity collection tab is attached to a pair of the electrodes; each pair of a positive electrode and a negative electrode face to face through a nylon separator; the electrodes are placed in a polyethylene bag and pressured from both sides of the electrodes; and potassium hydroxide aqueous solution of 25 weight percent is poured into the bag. The experimental cells are charged at 600mA for 3 hours against the theoretical capacity of the electrode (600mAh), and then the cells are discharged at 200mA until the final discharge voltage reaches 1.0V. A cycle of such charging and discharging is repeated.

After charging at the fifth cycle, active material is taken out of the positive electrodes and ratio of γ-nickel oxyhydroxide and (3-nickel oxyhydroxide (γ/β ratio) is measured by X-ray diffraction analysis .

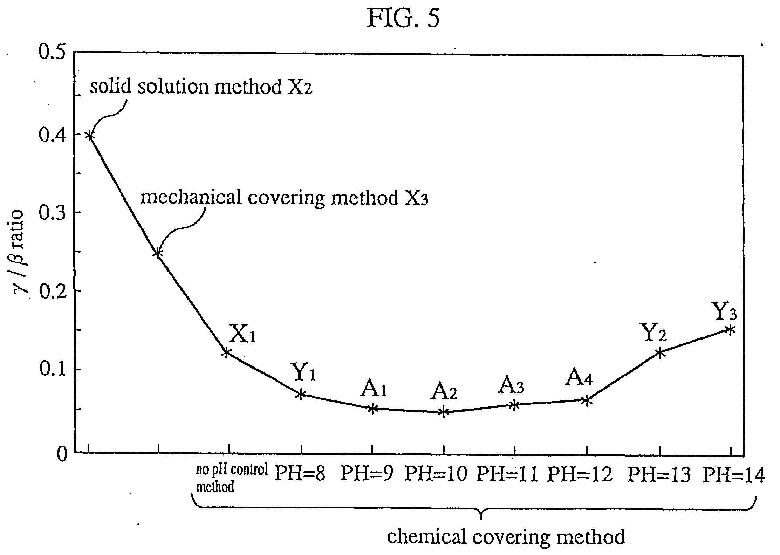

X-ray diffraction analysis is carried out in the following conditions: CuKα ray is used; lamp voltage is 30KV; lamp current is 12.5mA; and scanning speed is 3deg/min. γ/β ratio is obtained from 20=12.8°: 20=18.2°, which is the ratio of peaks of γ-nickel oxyhydroxide (003) and β-nickel oxyhydroxide (001). Fig. 5 is the results, showing relation between conditions of adding cadmium hydroxide to nickel hydroxide and γ/β ratio of active material after the experiment: the highest γ/β ratio is recognized in electrode X2 (produced by solid solution method); the second highest is in electrode X3 (mechanical covering method); and electrodes produced by chemical covering method follow afterwards.

γ/β ratio of electrodes Y2 (pH 13) and Y3 (pH 14) is equal to or above that of electrode X1 (produced by no pH control method), but γ/β ratio of electrodes Y1, A1-A4 (pH 8 to 12) are remarkably low.

The results mentioned above show that generation of γ-nickel oxyhydroxide is greatly affected by the method of adding cadmium to nickel hydroxide; the generation of γ-nickel oxyhydroxide is most suppressed by chemical covering method with pH being equal to or below 12. The reason can be explained as follows: a dense covering layer having few asperities is generated by chemical covering method with pH being adjusted equal to or below 12.

### [Experiment 4]

Open type experimental cells produced in the same way as Experiment 3 are charged at 60mA for 16 hours against the theoretical capacity of the electrode (600mAh), and then discharged at 200mA until the final discharge voltage reaches 1.0V. A cycle of such charging and discharging is carried out twice. Active material utilization is obtained from theoretical capacity of the electrode and measured value of the second discharge capacity.

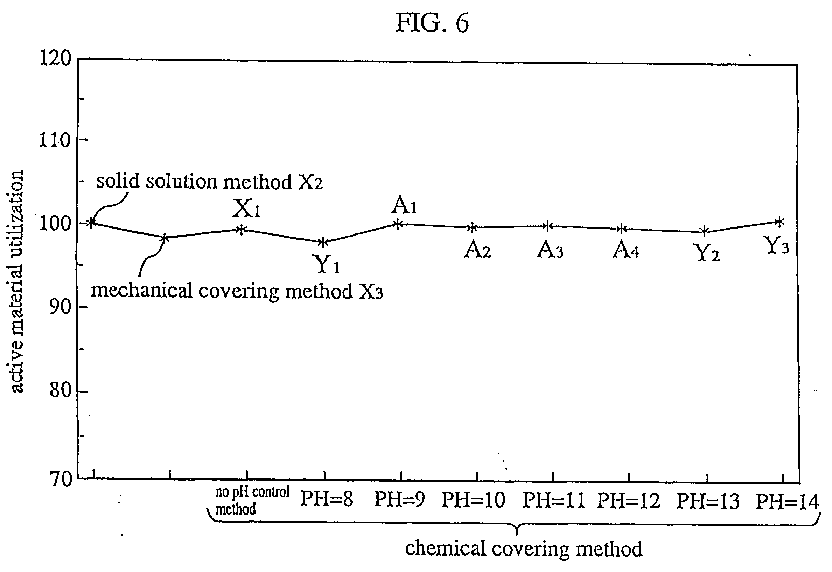

Fig. 6 shows the result, in which utilization of electrode X2 produced by solid solution method being expressed as standard value 100. Fig. 6 shows that there is almost no difference between electrodes X1-X3 and Y1-Y3 in active material utilization, and utilization is rather good in active material produced by chemical covering method.

### [Experiment 5]

Active materials are produced in the same way as active material a3 of Embodiment 1 is produced, with amount of cadmium hydroxide against nickel hydroxide ranging from 2 to 20 weight percent. Nickel electrodes using such active materials are produced in the same way as nickel electrode A3 of Embodiment 1 is produced.

Then, relation between the amount of cadmium hydroxide and γ/β ratio, and relation between the amount of cadmium hydroxide and active material utilization are examined.

γ/β ratio is measured according to the method in Experiment 3, and active material utilization is measured according to the method in Experiment 4.

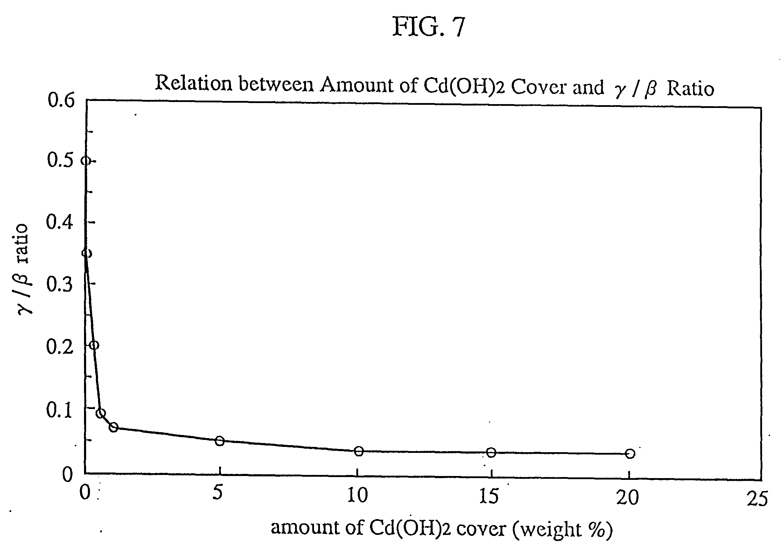

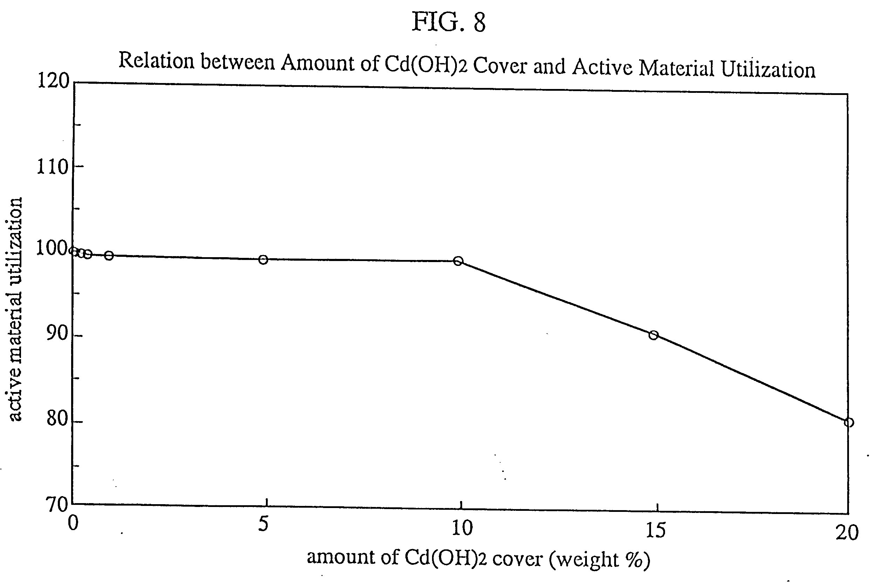

Fig. 7 shows relation between the amount of covering layer of cadmium hydroxide and γ/β ratio. Fig. 8 shows relation between the amount of covering layer of cadmium hydroxide and active material utilization. In Fig. 8, when amount of covering layer of cadmium hydroxide is 0%, active material utilization is expressed as standard value 100.

In Fig. 7, γ/β ratio rapidly increases when amount of covering layer of cadmium hydroxide is below 0.5 weight percent, and it remains at low value when the amount is equal to or over 0.5 weight percent: It is apparent from the result that generation of γ-nickel oxyhydroxide is suppressed remarkably when the amount of covering layer of cadmium hydroxide is equal to or over 0.5 weight percent.

Fig. 8 shows that active material utilization tend to decline as the amount covering layer of cadmium hydroxide increases. When the amount of covering layer of cadmium hydroxide is equal to or below 10 weight percent, the decline is moderate. When the amount is over 10 weight percent, the decline is steep.

The decline of active material utilization along with the increase of the amount of covering layer of cadmium hydroxide can be explained as follows: As the amount of covering layer of cadmium hydroxide increases, the amount of nickel hydroxide which contribute to electrochemical reaction decreases, thereby decreasing active material utilization. Moreover, as cadmium hydroxide itself has bad conductivity and does not directly contribute to electrochemical reaction, it can be assumed that when the amount exceeds 10 weight percent, conductivity of electrode decreases, so active material utilization decreases rapidly.

It is apparent from Figs. 7 and 8 that the optimal amount of covering layer of cadmium hydroxide on the surface of nickel hydroxide particles is 0.5 to 10 weight percent.

### [Experiment 6]

γ/β ratio of the following electrodes is measured in the same way as electrode A3 of Embodiment 1: electrode A3 of Embodiment 1; electrodes C, D, E, and F of Embodiment 5; and electrode X0 of Comparative Example 5. Table 2 shows the results.

It is apparent from Table 2 that electrodes A3, C, D, E, and F (especially electrodes A3, C, and D) having active materials covered with a group II element compound has small γ/β ratio compared to electrode X0 having active material x0 covered with nothing.

As electrodes C, D, and A3 have equal γ/β ratio, it is apparent that generation of γ-nickel oxyhydroxide can be suppressed remarkably when the first covering layer is formed by zinc compound and magnesium compound as well as cadmium compound.

### [Experiment 7]

In order to examine effects of ammonia group in solution, apparent density and γ/β ratio of the following active materials and electrodes are measured in the same way as Experiments 2 and 3: active material a3 and electrode A3 in Embodiment 1; active material b1 and electrode B1 in Embodiment 2; active material b2 and electrode B2 in Embodiment 3; and active material b3 and electrode B3 in Embodiment 4. Table 3 shows the results.

Table 3 shows that active materials b1, b2, b3 whose first covering layer is formed in solution having ammonia group has higher apparent density and smaller γ/β ratio compared to active material a3 whose first covering layer is formed in solution having no ammonia group.

This can be explained as follows: if ammonia group exists in solution, cadmium hydroxide is precipitated slowly as ammonia complex of cadmium is formed, thereby forming a more dense cadmium hydroxide layer having fewer asperities.

### [Experiment 8]

Active materials are produced in the same way as active material b2 of Embodiment 3 is produced, with the amount of covering layer of cadmium hydroxide on the nickel hydroxide ranging from 0 to 20 weight percent. Nickel electrodes using such active materials are produced.

Then, relation between amount of covering layer of cadmium hydroxide and γ/β ratio, and amount of covering layer of cadmium hydroxide and active material utilization are examined as in Experiment 5.

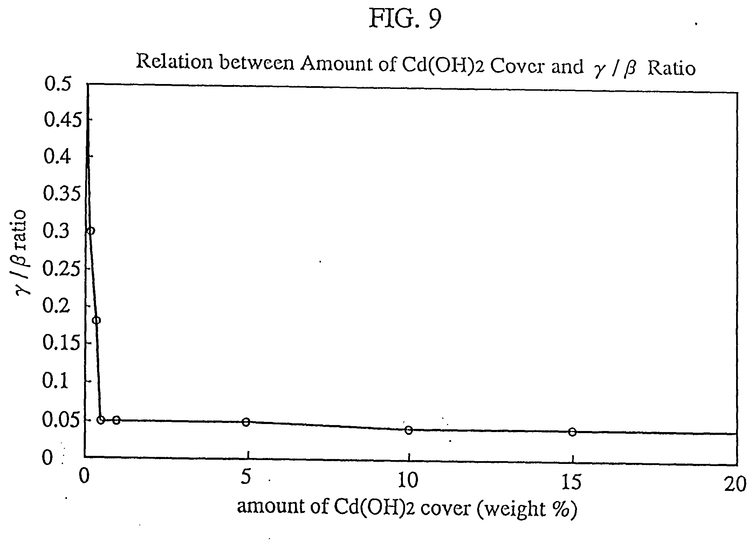

Fig. 9 shows relation between amount of covering layer of cadmium hydroxide and γ/β ratio. The relation between the amount of covering layer of cadmium hydroxide and active material utilization is almost the same as that of Experiment 5, which is shown in Fig. 8.

It is apparent from the results that generation of γ-nickel oxyhydroxide is suppressed remarkably when the amount of covering layer of cadmium hydroxide is equal to or over 0.5 weight percent like the case of Experiment 5, and optimal amount of covering layer of cadmium hydroxide is between 0.5 to 1.0 weight percent against the nickel hydroxide particles.

### (Embodiment 6)

In the present embodiment, while pH of dispersion medium in which nickel hydroxide particles are dispersed is maintained at 9 to 12, the first covering layer composed of cadmium compound is precipitated, and the second covering layer composed of cobalt compound is precipitated thereon.

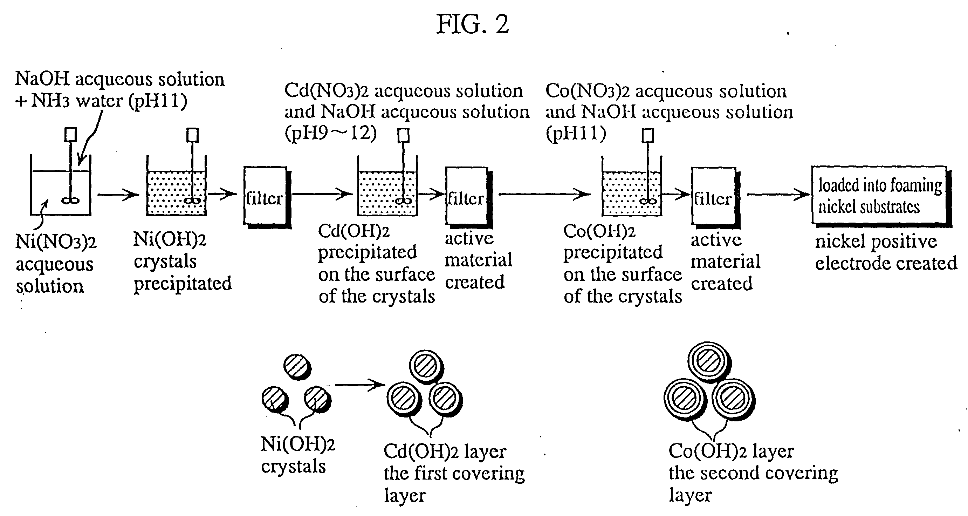

Fig. 2 shows how a nickel electrode of the present embodiment is produced and state of nickel hydroxide particles at each step.

### [Production of Active Material]

Nickel hydroxide particles on which a first covering layer is formed are produced in the same way as Embodiment 1, the first covering layer mainly being composed of cadmium hydroxide.

The first covering layer is dense and has few asperities as it is gradually precipitated while pH of the dispersion medium being maintained at 9 to 12.

Then, cobalt nitrate aqueous solution of 20 weight percent and sodium hydroxide aqueous solution of 25 weight percent are added so that a second covering layer mainly composed of cobalt hydroxide is formed on the surface of the first covering layer. At this time, amount of each aqueous solution is adjusted as to maintain pH of the mixed solution at 11.

After steps of filtering, washing by water, and drying, active materials g1, g2, g3, and g4 are produced.

The amount of the first covering layer is adjusted so that the amount of covering layer of cadmium hydroxide is 1.4 weight percent against nickel hydroxide, and the amount of the second covering layer is adjusted so that the amount of cobalt hydroxide is 7 weight percent against nickel hydroxide.

### [Production of Nickel Electrodes]

Active material slurry is produced by mixing 80 parts by weight of the active materials g1, g2, g3 and g4, and 20 parts by weight of methylcellulose aqueous solution of 1 weight percent. The resultant slurry is loaded in foaming nickel substrates. Then the foaming nickel substrates are dried and pressed so that nickel electrodes G1, G2, G3 and G4 are produced.

### (Comparative Example 6)

Active materials z1, z2, and z3 are produced in the same way as Embodiment 6 except for pH of the mixed solution in the step of forming the first covering layer being maintained at 8, 13, and 14.

Nickel electrodes Z1, Z2, and Z3 are produced in the same way as Embodiment 6, with active materials z1, z2, and z3 being used.

### (Comparative Example 7)

Nickel hydroxide particles are produced in the same way as Embodiment 1. The first covering layer mainly composed of cadmium hydroxide is formed on the surface of the nickel hydroxide particles by no pH control method as in Comparative Example 2.

Such nickel hydroxide particles are stirred in cobalt nitrate aqueous solution of 25 weight percent. Then sodium hydroxide aqueous solution of 25 weight percent is added so that the second covering layer mainly composed of cobalt hydroxide is formed on the first covering layer. After steps of filtering, washing by water, and drying, active material w is produced.

The amount of the first and the second covering layer of active material w is set to the same amount of active materials g1 to g4 in Embodiment 6.

Nickel electrode W is produced in the same way as Embodiment 6, with active material w being used.

### (Comparative Example 8)

Active material v having only a layer of cobalt hydroxide without a layer of cadmium hydroxide is produced according to the method of producing the active material of Embodiment 6. Such a method of precipitating only a layer of cobalt hydroxide is referred to as "cobalt covering layer only" hereinafter.

Nickel electrode V is produced in the same way as Embodiment 6, with active material v being used.

### (Embodiment 7)

In the present embodiment, a first covering layer of a group II element compound other than cadmium is precipitated, and a second covering layer of cobalt compound is precipitated thereon.

Active materials h, i, j, and k are produced in the same way as producing active material g3 of Embodiment 6 except for using zinc nitrate aqueous solution, magnesium nitrate aqueous solution, barium nitrate aqueous solution, and calcium nitrate aqueous solution instead of cadmium nitrate aqueous solution.

On the surface of active materials h, i, j, and k, a first covering layer which is dense and has few asperities is formed, the covering layer being composed of zinc compound, magnesium compound, barium compound, and calcium compound, respectively. On the surface of the first covering layer, a second covering layer composed of cobalt compound is formed.

Electrodes H, I, J, and K are produced in the same way as Embodiment 6, with active materials h, i, j, and k being used.

Nickel active materials of Embodiments 6 and 7 and Comparative Examples 6 to 8 are summarized in Table 4.

Here, experiments are carried out, with nickel active materials and nickel electrodes of Embodiments 6 and 7 and Comparative Examples 6 to 8 being used.

### [Experiment 9]

Amount of NO₃⁻ residue of the following active materials are measured by colorimetric analysis method: active materials gl to g4 of Embodiment 6; active materials z1 to z3 of Comparative Example 6; active material w of Comparative Example 7; and active material v of Comparative Example 8.

Table 5 shows the result. Amount of NO₃⁻ residue of active material w of cobalt covering layer only is expressed as standard value 100.

It is apparent from Table 5 that when cadmium hydroxide is precipitated, amount of NO₃⁻ residue is remarkably large at pH 8, but it is remarkably small at pH between 9 to 14.

This is the same result as Experiment 1. It shows that optimal pH value is equal to or over 9 when the first covering layer is formed.

The same result can be obtained by using sulfate , chloride and the like instead of nitrate.

### [Experiment 10]

Nickel-cadmium storage cells of nominal capacity 1000mAh and AA size are produced in the following way in order to measure cycle characteristics: positive electrodes are electrodes G1 to G4 of Embodiment 6, electrodes Z1 to Z3 of Comparative Example, electrode W of Comparative Example 7, and electrode V of Comparative Example 8; negative electrodes are well-known paste of cadmium electrode having 1.5 times the amount of electric chemical capacity of each positive electrode; and alkali electrolyte mainly comprising potassium hydroxide aqueous solution is used in each cell.

Cycle characteristics are measured as follows: cell capacity is measured during repetitions of. each cell being charged at 200mA for eight hours and discharged at 1A until it reaches 1.0V.

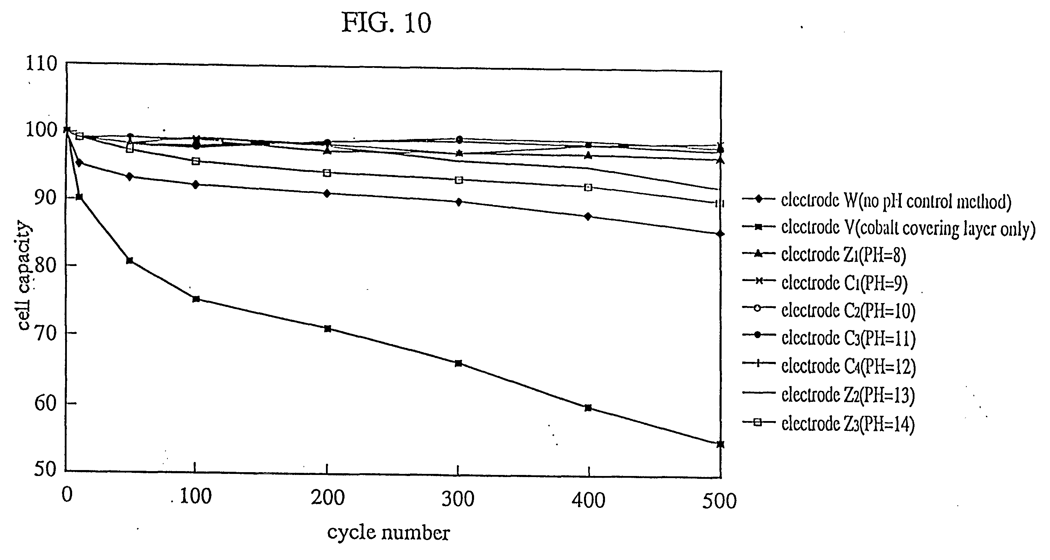

Fig. 10 is the result, showing the relation between charge and discharge cycle number and cell capacity. In Fig. 10, discharge capacity of the first cycle is expressed as standard value 100.

It is apparent from Fig. 10 that electrode W of cobalt covering layer only shows remarkable decrease of capacity along with the passage of charge and discharge cycles. This is due to cobalt on the surface of active material w which diffuses into the nickel hydroxide particles along with the passage of charge and discharge cycles.

Electrode V having the first covering layer formed by no pH control method shows less decrease of capacity than electrode W of cobalt covering layer only, but electrode V shows much decrease than electrodes G1 to G4 and Z1 to Z3 having the first covering layer formed by adjusting pH value.

This can be explained as follows: As the first covering layer which is dense and having few asperities cannot be formed on the surface of the nickel hydroxide particles by no pH control method, cobalt in the second covering layer diffuses into the nickel hydroxide particles through holes of the first covering layer.

Among electrodes G1 to G4 and Z1 to Z3, electrodes Z1 and G1-G4 of pH 8 to 12 show less decrease of capacity along with passage of charge and discharge cycles compared to electrodes Z2 and Z3 of pH 13 and 14, respectively.

This can be explained as follows: as cadmium hydroxide is rapidly precipitated at high pH value like 13 and 14, a first covering layer which is dense and having few asperities cannot be formed, and cobalt diffuses into the nickel hydroxide particles through pore during the charging and discharging cycles.

It is apparent from the present experiment and Experiment 9 that optimal range of pH is 9 to 12 when the second covering layer is formed on the first covering layer.

### (Experiment 11)

Active materials are produced in the same way as active material g4 of Embodiment 6 is produced, with amount of total covering layer (total amount of the first and the second covering layers) against nickel hydroxide being 0, 1, 3, 5, 10, 15, 25, 30, and 35 weight percent, respectively. Here, amount of the first covering layer (cadmium compound layer) is fixed at 20 weight percent against the second covering layer (cobalt compound).

With those active materials, nickel electrodes and nickel-cadmium storage cells of nominal capacity 1000mAh and AA size are produced in the same way as Embodiment 6 so as to measure active material utilization.

The active material utilization is measured as follows: a cycle of charging at 200mA for eight hours and discharging at 1A until voltage reaches 1.0V is repeated; discharge capacity of the tenth cycle is measured; and ratio of values of electrode theoretical capacity and discharge capacity is obtained.

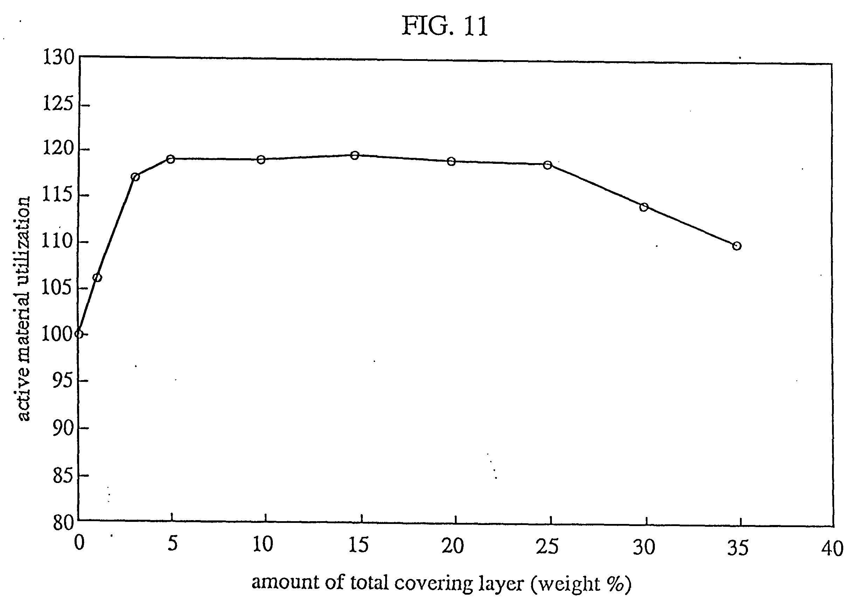

Fig. 11 is the results, showing relation between the amount of total covering layer against the nickel hydroxide and active material utilization.

In Fig. 11, when the amount of the total covering layer is 0 weight percent, active material utilization is expressed as standard value 100.

It is apparent from Fig. 11 that active material utilization is high between the range of 3 to 25 weight percent of the amount of the total covering layer.

This can be explained as follows: when active material utilization is below 3 weight percent, small amount of the total covering layer cannot improve active material utilization sufficiently; and when active material utilization is over 25 weight percent, ratio of nickel hydroxide decreases.

### (Experiment 12)

Active materials are produced in the same way as active material g3 of Embodiment 6 is produced, with ratio of the first covering layer (amount of cadmium compound) against the second covering layer (amount of cobalt compound) being 0, 0.3, 0.5, 5, 10, 20, 30, 40, 50 and 60 weight percent, respectively. Here, the total covering layer against the nickel hydroxide particles is fixed at 10 weight percent.

With those active materials, nickel electrodes and nickel-cadmium storage cells of nominal capacity 1000mAh and AA size are produced in the same way as Embodiment 6 so as to measure active material utilization and cycle characteristics.

### [Measuring Active Material Utilization]

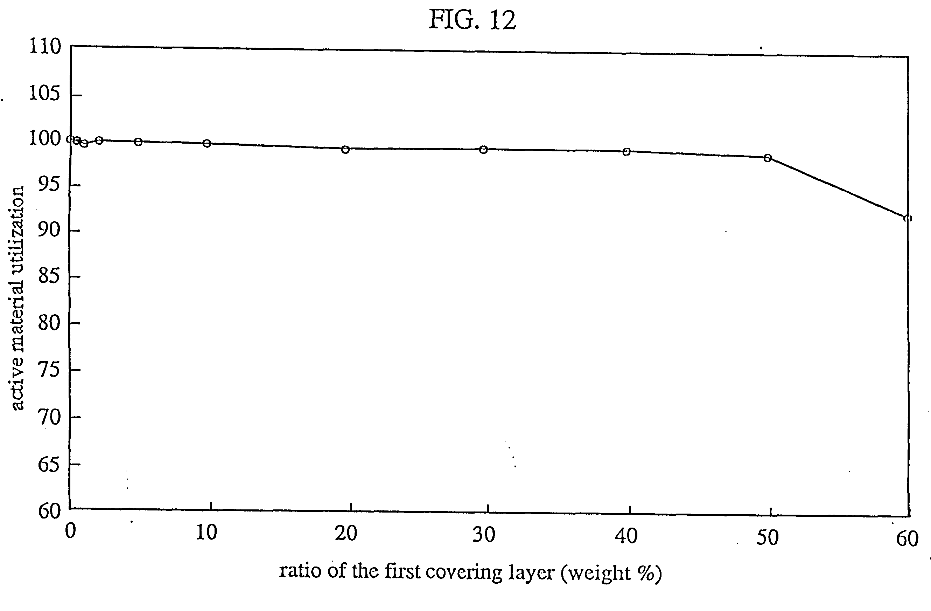

Active material utilization is measured in the same way as Experiment 11. Fig. 12 is the result, showing relation between ratio of the first covering layer against the second covering layer and active material utilization. In Fig. 12, when the amount of the first covering layer is 0 weight percent, the active material utilization is expressed as standard value 100.

It is apparent from Fig. 12 that when the amount of the first covering layer against the second covering layer exceeds over 50 weight percent, active material utilization decreases. Therefore, the optimal amount is equal to or below 50 weight percent.

### [Measuring Cycle Characteristics]

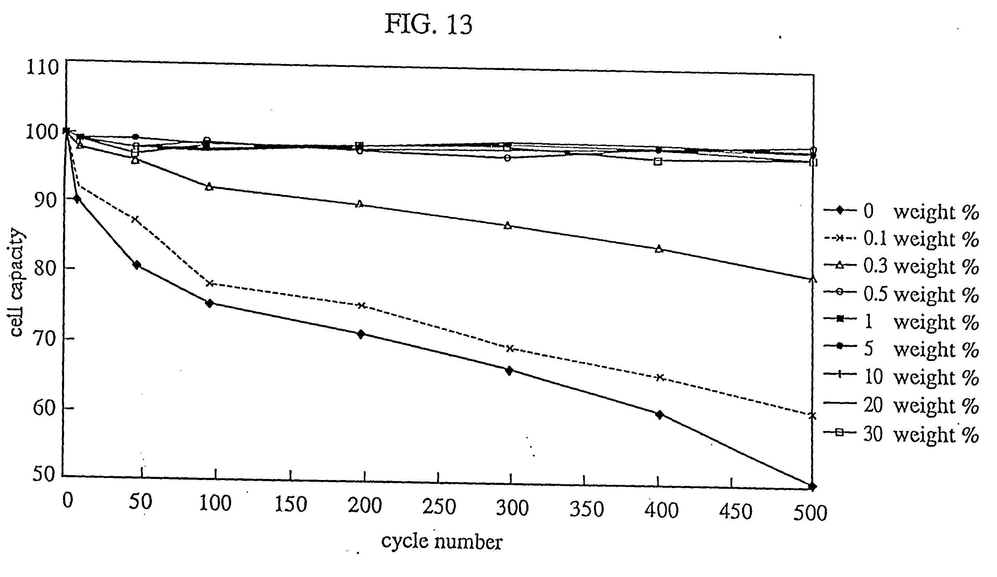

Cycle characteristics are measured in the same way as Experiment 10. Fig. 13 is the results, showing relation between charge and discharge cycle number and cell capacity. In Fig. 13, discharge capacity of the first cycle of each cell is expressed as standard value 100.

It is apparent from Fig. 13 that when the ratio of the first covering layer against the second covering layer is below 0.3 weight percent, cell capacity decreases greatly along with the passage of charge and discharge cycles compared to the case of over 0.5 weight percent. Therefore, optimal ratio is equal to or over 0.5 weight percent.

It is clear from the active material utilization and cycle characteristics mentioned above that optimal ratio of the first covering layer (cadmium compound layer) against the second covering layer (cobalt compound) is 0.5 to 50 weight percent.

### (Experiment 13)

Nickel-cadmium storage cells of nominal capacity 1000mAh and AA size are produced, with electrode G3 of Embodiment 6, electrodes H, I, J, K of Embodiment 7, and electrode W of Comparative Example 7 being used, and active material utilization and cycle characteristics are measured.

### [Measuring Active Material Utilization]

Active material utilization is measured in the same way as Experiment 11.

Table 6 shows the results. In Table 6, active material utilization of electrode C3 is expressed as standard value 100.

It is apparent from Table 6 that active material utilization of all electrodes are almost the same.

### [Measuring Cycle Characteristics]

Cycle characteristics are measured in the same way as Experiment 10.

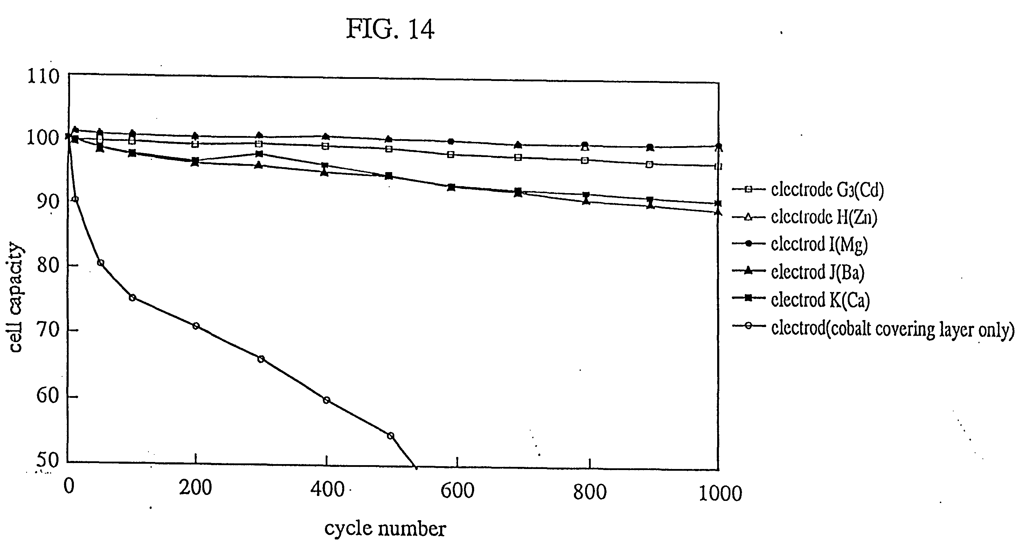

Fig. 14 is the result, showing relation between charge and discharge cycle number and cell capacity. In Fig. 14, cell capacity of the first cycle discharge capacity is expressed as standard value 100.

It is apparent from Fig. 14 that electrodes G3, H, I, J, and K (especially electrodes C3, H, and I), whose active material has the first covering layer composed of a group II element compound, show remarkable effect of suppressing decrease of cell capacity along with passage of charge and discharge cycles compared to electrode W of cobalt covering layer only.

Among electrodes G3, H, I, J, and K, electrodes H and I show a little less decrease of cell capacity along with passage of charge and discharge cycles compared to electrode G3. Electrodes J and K show a little more decrease.

It is clear from the result that if the first covering layer is formed by zinc compound or magnesium compound instead of cadmium compound, it can prevent cobalt in the second covering layer from diffusing into the nickel hydroxide particles effectively. If the first covering layer is formed by barium compound or calcium compound, little less effect of preventing cobalt diffusion is obtained.

### (Others)

In Experiments 5 to 8, and 11 to 13, pH of the dispersion medium is controlled at 11, but the same effects can be obtained with pH being controlled at 9 to 12.

Method of adding ammonia group for precipitating a group II element compound is not restricted to the methods described in Embodiments 2, 3, and 4. For example, aqueous ammonia is added to a solution including nickel hydroxide beforehand. Potassium hydroxide aqueous solution, and cadmium nitrate aqueous solution are added to the solution at the same time. The same effects can be obtained from this method.

In the above embodiments, aqueous solution of nitrate and ammonium nitrate salt of group II elements are used as solutions of group II elements. But aqueous solutions of sulfate, ammonium sulfate salt, chloride, and ammonium hydrochloric salt of group II elements can also ensure the same effect.

In the above embodiments, sodium hydroxide aqueous solution and mixture of aqueous ammonia and sodium hydroxide aqueous solution are used as alkali solution for adjusting pH. But the same effects can be obtained by potassium hydroxide aqueous solution, lithium hydroxide aqueous solution, mixture of the two solutions and aqueous ammonia.

In the above embodiments, covering layers are formed on the surface of nickel hydroxide particles. But the same effect can be obtained by different type of metals (zinc, cobalt, cadmium, magnesium, aluminum, and the like) being in the nickel hydroxide particles as solid solution state.

In the above embodiments, electrodes are produced by loading active material in foaming nickel substrates. But the same effect can be obtained by applying the active material to electrode plate like punched metal and the like.

Although the present invention has been fully described by way of examples with reference to the accompanying drawings, it is to be noted that various changes and modifications will be apparent to those skilled in the art. Therefore, unless otherwise such changes and modification depart from the scope of the present invention, they should be construed as being included therein.

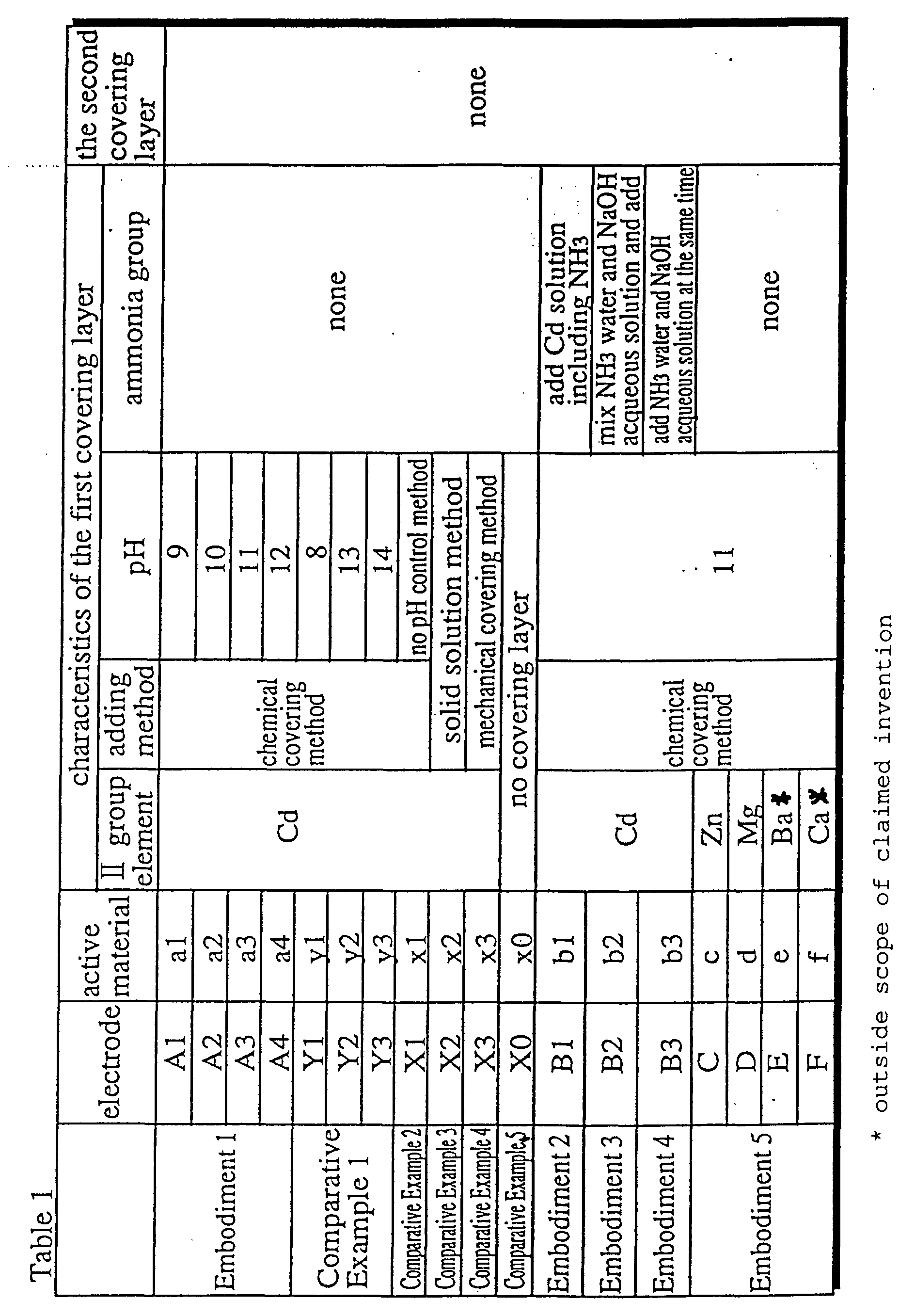

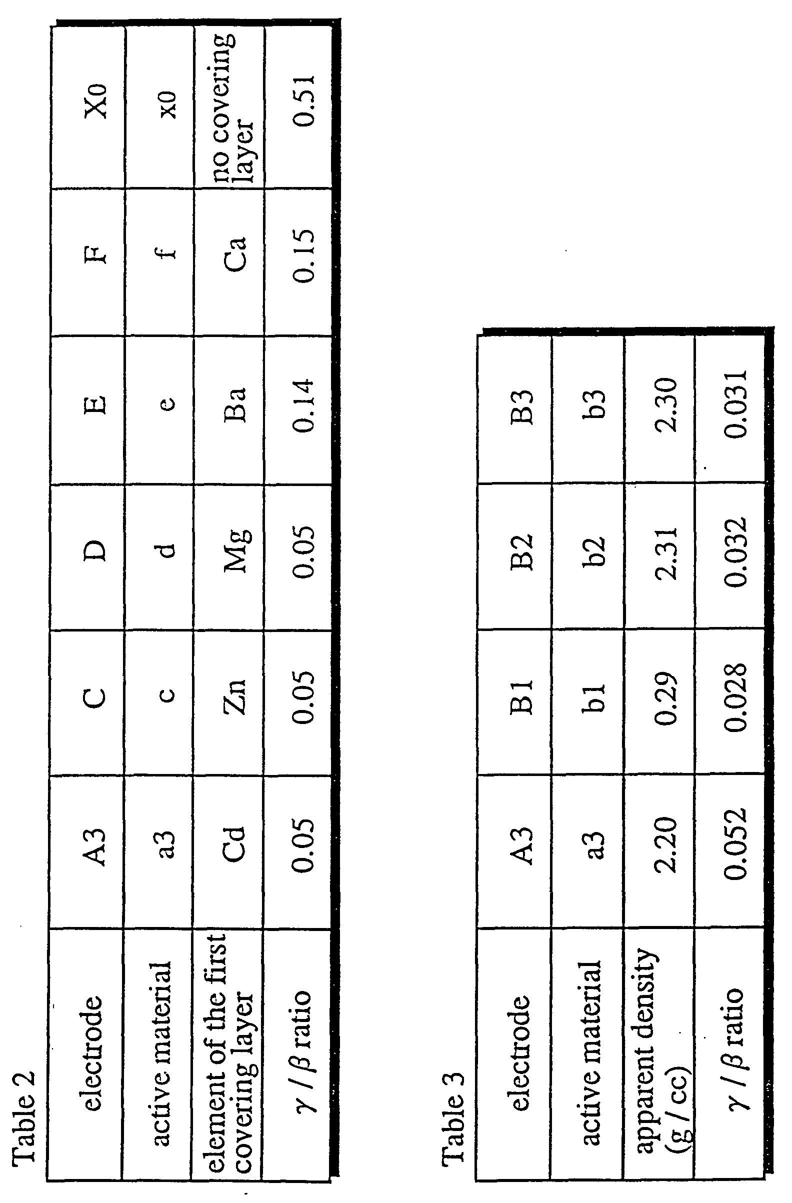

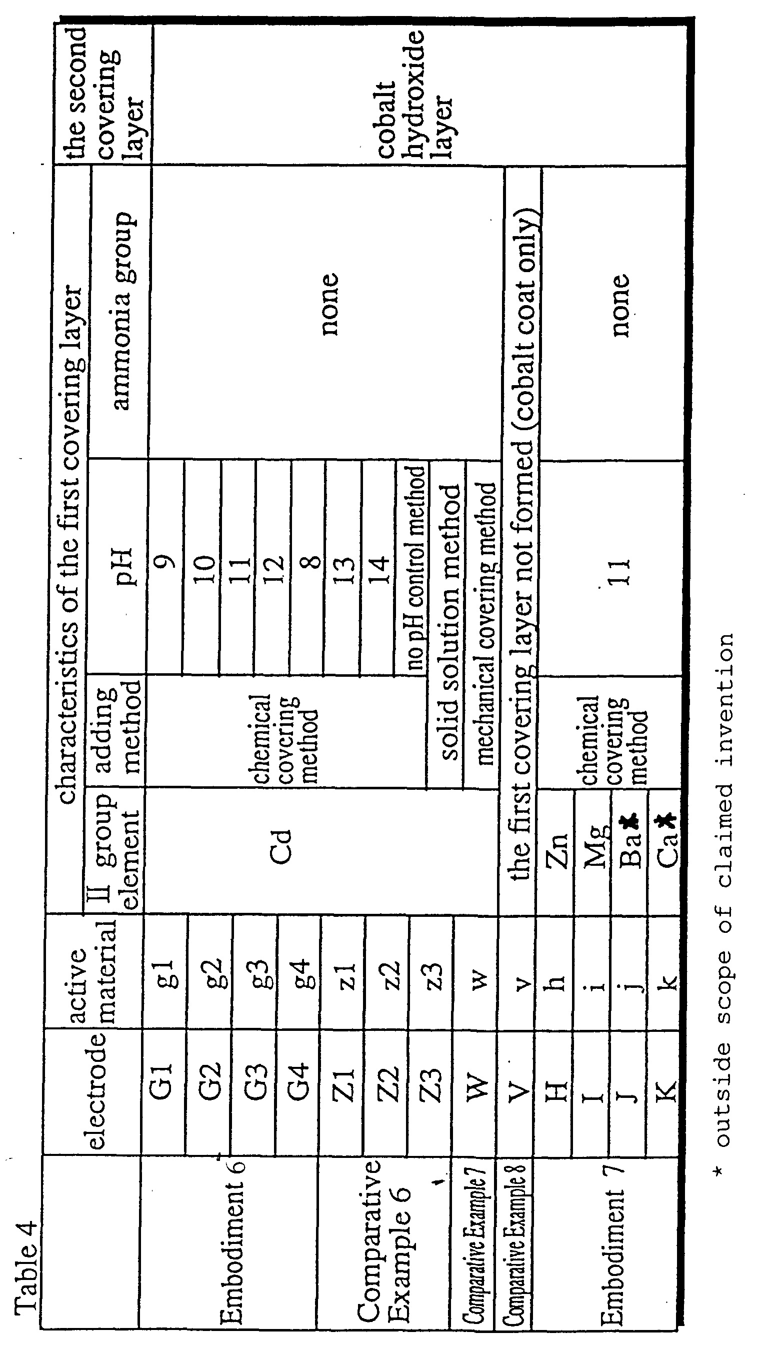

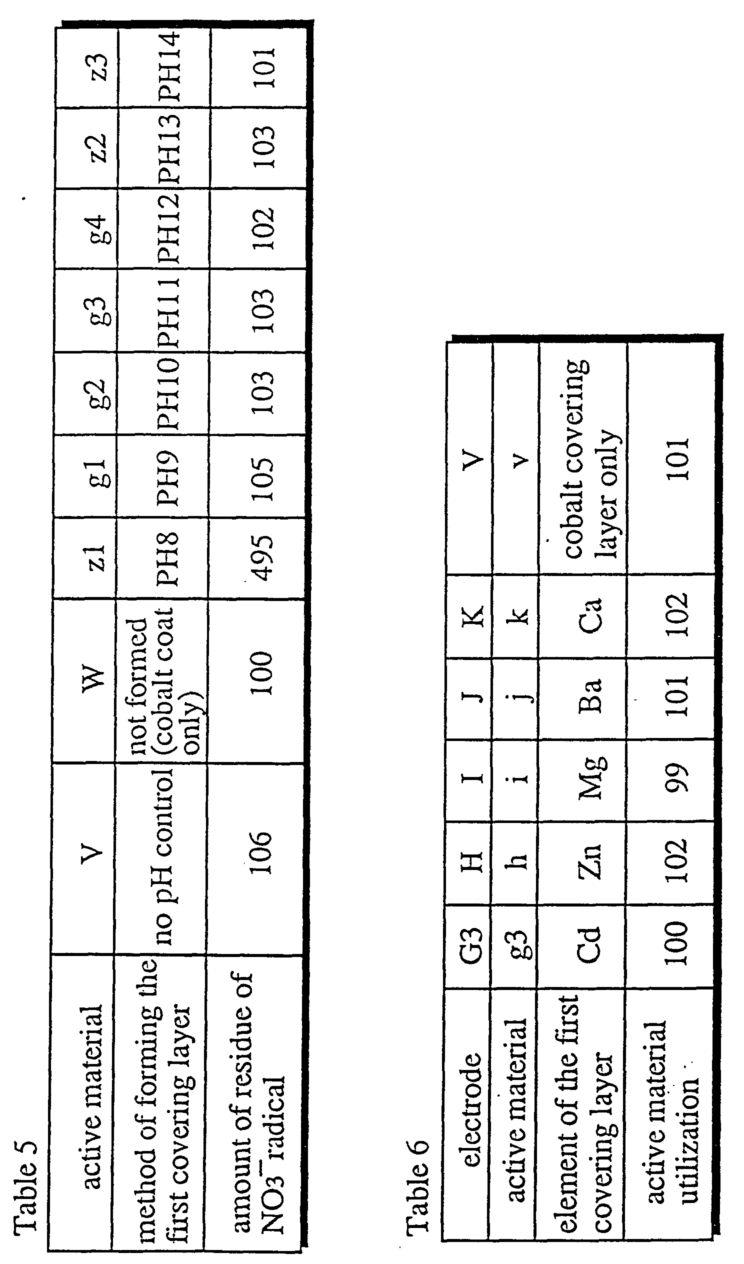

## Claims

1. A method of producing a nickel electrode for an alkali storage cell comprising steps of:
creating an active material including forming a first covering layer on the surface of one of nickel hydroxide particles and particles mainly composed of nickel hydroxide in a dispersion medium, the first covering layer being mainly composed of at least one compound of a dense element selected from a group consisting of cadmium, zinc and magnesium compounds, wherein the first covering layer is formed by precipitation by adding a solution in which a given amount of the cadmium, zinc or magnesium is dissolved and an alkali solution, where the amount of each solution is adjusted to maintain the pH of the dispersion medium at 9 to 12;
forming a second covering layer on the surface of the first covering layer, the second covering layer being mainly composed of a cobalt compound; and
holding the active material in an active material supporter.

2. A method of producing a nickel electrode for an alkali storage cell as claimed in claim 1, wherein the total amount of the first and second covering layers is 3 to 25 percent by weight of one of the nickel hydroxide particles and particles mainly composed of nickel hydroxide.

3. A method of producing a nickel electrode for an alkali storage cell as claimed in claim 1, wherein the amount of the first covering layer is 0.5 to 50 percent by weight of the second covering layer.

4. A method of producing a nickel electrode for an alkali storage cell as claimed in claim 1, wherein the solution in which the cadmium, zinc or magnesium is dissolved used in forming the first covering layer is at least one solution selected from a group consisting of aqueous solutions of sulfate, nitrate, chloride, ammonium sulfate salt, ammonium nitrate salt, and ammonium hydrochloride of the cadmium, zinc or magnesium.

5. A method of producing a nickel electrode for an alkali storage cell as claimed in claim 1, wherein the alkali solution used in forming the first covering layer is at least one solution selected from a group consisting of sodium hydroxide aqueous solution, potassium hydroxide aqueous solution, lithium hydroxide aqueous solution, and aqueous ammonia.

6. An alkali storage cell, wherein active material in a positive electrode comprises one of nickel hydroxide particles and particles mainly composed of nickel hydroxide on which first and second covering layers are formed, the first covering layer being composed of at least one compound of a dense element selected from a group consisting of cadmium, zinc and magnesium compounds, wherein the first covering layer is formed by precipitation by adding a solution in which a given amount of the cadmium, zinc or magnesium is dissolved and an alkali solution, where the amount of each solution is adjusted to maintain the pH of the dispersion medium at 9 to 12; and
the second covering layer formed on the surface of the first covering layer being mainly composed of a cobalt compound.

7. An alkali storage cell as claimed in claim 6, wherein the total amount of the first and second covering layers is 3 to 25 percent by weight of one of the nickel hydroxide particles and particles mainly composed of nickel hydroxide.

8. An alkali storage cell as claimed in claim 6, wherein the amount of the first covering layer is 0.5 to 50 percent by weight of the second covering layer.

## Patentansprüche

1. Verfahren zur Herstellung einer Nickelelektrode für eine Alkali-Akkumulatorzelle, umfassend die Schritte:
Erzeugen eines aktiven Materials unter Bildung einer ersten Deckschicht auf der Oberfläche von einem aus Nickelhydroxid-Teilchen oder Teilchen, die hauptsächlich aus Nikkelhydroxid zusammengesetzt sind, in einem Dispersionsmedium, wobei die erste Deckschicht hauptsächlich aus zumindest einer Verbindung eines dichten Elements zusammengesetzt ist, das aus der Gruppe ausgewählt ist, die aus Cadmium-, Zink- und Magnesium-Verbindungen besteht, wobei die erste Deckschicht durch Präzipitation gebildet wird, indem eine Lösung, in der eine gegebene Menge des Cadmiums, Zinks oder Magnesiums gelöst ist und eine Alkali-Lösung zugesetzt wird, wobei die Menge jeder Lösung zum Halten des pH's des Dispersionsmediums bei 9 bis 12 eingestellt wird;
Bilden einer zweiten Deckschicht auf der Oberfläche der ersten Deckschicht, wobei die zweite Deckschicht hauptsächlich aus einer Kobaltverbindung zusammengesetzt ist; und
Aufnehmen des aktiven Materials in einen Träger für das aktive Material.

2. Verfahren zur Herstellung einer Nickelelektrode für eine Alkali-Akkumulatorzelle nach Anspruch 1, bei dem der Gesamtanteil der ersten und zweiten Deckschicht an Nickelhydroxid-Teilchen oder Teilchen ist, die hauptsächlich aus Nickelhydroxid zusammengesetzt sind, 3 bis 25 Gew.% beträgt.

3. Verfahren zur Herstellung einer Nickelelektrode für eine Alkali-Akkumulatorzelle nach Anspruch 1, wobei der Anteil der ersten Deckschicht 0,5 bis 50 Gew.% der zweiten Deckschicht beträgt.

4. Verfahren zur Herstellung einer Nickelelektrode für eine Alkali-Akkumulatorzelle nach Anspruch 1, bei dem die Lösung, in der Cadmium, Zink oder Magnesium gelöst ist, und die bei der Bildung der ersten Deckschicht verwendet wird, zumindest eine Lösung ist, die aus einer Gruppe ausgewählt ist, die aus wäßrigen Lösungen eines Sulfats, Nitrats, Chlorides, Ammoniumsulfat-Salzes, Ammoniumnitrat-Salzes und Ammoniumhydrochlorids des Cadmiums, Zinks oder Magnesiums besteht.

5. Verfahren zur Herstellung einer Nickelelektrode für eine Alkali-Akkumulatorzelle nach Anspruch 1, bei der die bei der Bildung der ersten Deckschicht verwendete Alkali-Lösung zumindest eine Lösung ist, die aus einer Gruppe ausgewählt ist, die aus einer wäßrigen Natriumhydroxid-Lösung, einer wäßrigen Kaliumhydroxid-Lösung, einer wäßrigen Lithiumhydroxid-Lösung und aus wäßrigem Ammoniak besteht.

6. Alkali-Akkumulatorzelle, bei der das aktive Material in einer positiven Elektrode Nickelhydroxid-Teilchen oder Teilchen umfaßt, die hauptsächlich aus Nickelhydroxid zusammengesetzt sind, auf denen eine erste und zweite Deckschicht gebildet sind, wobei die erste Deckschicht aus zumindest einer Verbindung eines dichten Elementes zusammengesetzt ist, das aus einer Gruppe ausgewählt ist, die aus Cadmium-, Zink- und Magnesium-Verbindungen besteht, wobei die erste Deckschicht durch Präzipitation gebildet ist, indem eine Lösung, in der eine gegebene Menge des Cadmiums, Zinks oder Magnesium gelöst ist, und eine Alkali-Lösung zugesetzt wird, wobei die Menge jeder Lösung zum Halten des pH's des Dispersionsmediums bei 9 bis 12 eingestellt ist; und
wobei die zweite, auf der Oberfläche der ersten Deckschicht gebildete Deckschicht hauptsächlich aus einer Kobaltverbindung zusammengesetzt ist.

7. Alkali-Akkumulatorzelle nach Anspruch 6, bei der der Gesamtanteil der ersten und zweiten Deckschicht an den Nickelhydroxid-Teilchen oder Teilchen, die hauptsächlich aus Nickelhydroxid zusammengesetzt sind, 3 bis 25 Gew.% beträgt.

8. Alkali-Akkumulatorzelle nach Anspruch 6, bei der der Anteil der ersten Deckschicht 0,5 bis 50 Gew.% der zweiten Deckschicht beträgt.

## Revendications

1. Procédé de fabrication d'une électrode de nickel pour une pile alcaline comprenant les étapes de :
créer un matériau actif, l'étape de création comprenant de former une première couche de revêtement sur la surface de particules d'hydroxyde de nickel ou de particules composées principalement d'hydro-oxyde de nickel dans un milieu de dispersion, la première couche de revêtement étant principalement composée d'au moins un composé d'un élément dense choisi à partir d'un groupe consistant en des composés de cadmium, de zinc et de magnésium, dans lequel la première couche de revêtement est formée par précipitation, en ajoutant une solution dans laquelle une quantité donnée de cadmium de zinc ou de magnésium est dissoute et une solution alcaline, la quantité de chaque solution étant ajustée pour maintenir le pH du milieu de dispersion entre 9 et 12 ;
former une seconde couche de revêtement sur la surface de la première couche de revêtement, la seconde couche de revêtement étant principalement composée d'un composé de cobalt ; et
maintenir le matériau actif dans un support de matériau actif.

2. Procédé de fabrication d'une électrode de nickel pour une pile alcaline selon la revendication 1, dans lequel la quantité totale des première et seconde couches de revêtement est de 3 à 25% en poids des particules d'hydroxyde de nickel ou des particules principalement composées d'hydroxyde de nickel.

3. Procédé de fabrication d'une électrode de nickel pour une pile alcaline selon la revendication 1, dans lequel la quantité de la première couche de revêtement est de 0,5 à 50% en poids de la seconde couche de revêtement.

4. Procédé de fabrication d'une électrode de nickel pour une pile alcaline selon la revendication 1, dans lequel la solution dans laquelle le cadmium, le zinc ou le magnésium est dissout, et qui est utilisée pour former la première couche de revêtement est au moins une solution choisie dans un groupe constitué des solutions aqueuses de sulfate, de nitrate, de chlorure, de sel de sulfate d'ammonium, de sel de nitrate d'ammonium, et d'hydrochlorure ammoniacal de cadmium, de zinc ou de magnésium.

5. Procédé de fabrication d'une électrode de nickel pour une pile alcaline selon la revendication 1, dans lequel la solution alcaline utilisée pour la formation de la première couche de revêtement est au moins une solution choisie dans un groupe constitué d'une solution aqueuse d'hydroxyde de sodium, d'une solution aqueuse d'hydroxyde de potassium, d'une solution aqueuse d'hydroxyde de lithium et de l'ammoniaque aqueux.

6. Pile alcaline, dans laquelle un matériau actif dans une électrode positive comprend des particules d'hydroxyde de nickel ou des particules principalement composées d'hydroxyde de nickel sur lequel des première et seconde couches de revêtement sont formées, la première couche de revêtement étant composée d'au moins un composé d'un élément dense choisi dans un groupe constitué des composés de cadmium, de zinc et de magnésium, dans laquelle la première couche de revêtement est formé par précipitation en ajoutant une solution dans laquelle une quantité donnée de cadmium, de zinc ou de magnésium est dissoute et une solution alcaline, la quantité de chaque solution étant ajustée pour maintenir le pH du milieu de dispersion entre 9 et 12 ; et
la seconde couche de revêtement formée sur la surface de la première couche de revêtement étant principalement composée d'un composé de cobalt.

7. Pile alcaline selon la revendication 6, dans laquelle la quantité totale des première et seconde couches de revêtement est de 3 à 25% par poids des particules d'hydroxyde de nickel ou des particules principalement composées d'hydroxyde de nickel.

8. Pile alcaline selon la revendication 6, dans laquelle la quantité de la première couche de revêtement est de 0,5 à 50% en poids de la seconde couche de revêtement.
